# EUROPEAN PATENT SPECIFICATION

(11) **EP 2 497 801 B1**
(45) Date of publication and mention of the grant of the patent: **19.11.2014**
(21) Application number: 09850919.3
(22) Date of filing: 29.12.2009
(51) Int. Cl.: C08L 71/12, C08L 77/00, C08K 3/04, C08K 7/24, C08L 53/02, C08L 51/06, C08L 25/08, C08L 23/00, C08J 5/00

(54) **POLYPHENYLENE-ETHER-BASED RESIN COMPOSITION, AND MOLDINGS USING SAME**
AUF POLYPHENYLENETHER BASIERENDE HARZZUSAMMENSETZUNG UND GUSSFORMEN DAMIT
COMPOSITION DE RÉSINE À BASE D'ÉTHER DE POLYPHÉNYLÈNE, ET PIÈCES MOULÉES UTILISANT UNE TELLE COMPOSITION

(30) Priority: 02.11.2009 KR 20090105149
(43) Date of publication of application: 12.09.2012
(73) Proprietor: Cheil Industries Inc., Kumi-city, Kyungsangbuk-do 730-030 (KR)
(72) Inventor: HUH, Jin-Young, Uiwang-si Gyeonggi-do 437-711 (KR); HA, Doo-Han, Uiwang-si Gyeonggi-do 437-711 (KR)
(74) Representative: Bublak, Wolfgang
(86) International application number: PCT/KR2009/007915
(87) International publication number: WO 2011/052848

(56) References cited:
- JP-A- 5 025 585
- JP-A- 5 255 586
- JP-A- 6 184 436
- JP-A- 7 026 135
- JP-A- 9 124 927
- JP-A- 9 279 012
- KR-A- 890 003 889
- KR-A- 910 004 746
- KR-A- 20060 061 306
- US-A1- 2003 130 406
- US-A1- 2007 205 401

## Description

### BACKGROUND

### 1. Field

This disclosure relates to a polyphenylene ether-based resin composition and a molded product using the same.

### 2. Description of the Related Art

A polyphenylene ether resin, or a mixture of a polyphenylene ether resin and a polystyrene resin, is widely used in various filed of automobile parts, electrical parts, and electronic parts due to excellent mechanical and electrical properties at a high temperature. However, the polyphenylene ether resin has bad chemical resistance and workability.

A polyamide resin has good chemical resistance and workability, but bad heat resistance and dimensional stability, and a high moisture absorption ratio. Therefore, it has a limit for application of engineering plastic resins.

A combination of the two resins implements improved chemical resistance, workability, and heat resistance and provides engineering plastic resins having excellent properties balance.

In order to provide such a resin with conductivity, a conductive additive such as carbon black, carbon nanotube, a carbon fiber, a metal powder, a metal-coated inorganic powder, a metal fiber may be used. However, when the carbon black is added in a significant amount (more than or equal to 3 wt% with respect to the total amount of a resin composition), sufficient electrical conductivity may not be ensured, while when a large amount of the conductive additive is added, basic mechanical properties of an electrical conductivity thermoplastic resin such as impact resistance and so on may be remarkably decreased. Carbon fiber is an excellent additive for providing an electrical conductivity and enhancing strength but has bad surface of a composite and deteriorates the impact strength and the elongation.

Carbon nanotube is a conductive additive having an excellent electrical conductivity and a high aspect ratio and may provide a resin with an electrical conductivity in a small amount, but it also deteriorates the impact strength. In addition, carbon nanotube may cause problems of adsorbing additive, particularly, a reactive monomer on the surface thereof to interrupt the functions.

Patent document US 2007/205401 A1 discloses a composition comprising a polyamide, a polyphenylene ether, a polyester and a conductive carbon filler such as carbon black, carbon fibril or carbon fibre. The resin composition may further comprise an elastomer such as a block copolymer of an aromatic vinyl compound and a conjugated diene compound, wherein said block copolymer is preferably hydrogenated.

### SUMMARY

One aspect of the present invention provides a polyphenylene-ether-based resin composition having an excellent property balance of electrical conductivity, impact strength, and heat resistance.

Another aspect of the present invention provides a molded product made using the polyphenylene-ether-based resin composition.

According to one aspect of the present invention, provided is a polyphenylene-ether-based resin composition that includes (A) a base resin including (A-1) 5 to 95 wt% of a polyphenylene ether-based resin and (A-2) 5 to 95 wt% of a polyamide resin; (B) 0.01 to 5 parts by weight of carbon nanotube, based on 100 parts by weight of the base resin; (C) 1 to 20 parts by weight of a styrene-based copolymer, based on 100 parts by weight of the base resin; and (D) 1 to 20 parts by weight of an olefin-based copolymer, based on 100 parts by weight of the base resin, wherein the olefin-based copolymer (D) is a copolymer polymerized with different kinds of olefin-based monomers, or a copolymer of an olefin-based monomer and an acryl-based monomer.

The polyphenylene ether-based resin (A-1) may be a polyphenylene ether resin, or a mixture of a polyphenylene ether and a vinyl aromatic polymer, and the polyphenylene ether resin may be selected from the group consisting of poly(2,6-dimethyl-1,4-phenylene)ether, poly(2,6-diethyl-1,4-phenylene)ether, poly(2,6-dipropyl-1,4-phenylene)ether, poly(2-methyl-6-ethyl-1,4-phenylene)ether, poly(2-methyl-6-propyl-1,4-phenylene)ether, poly(2-ethyl-6-propyl-1,4-phenylene)ether, poly(2,6-diphenyl-1,4-phenylene)ether, a copolymer of poly(2,6-dimethyl-1,4-phenylene)ether and poly(2,3,6-trimethyl-1,4-phenylene)ether, a copolymer of poly(2,6-dimethyl-1,4-phenylene)ether and poly(2,3,6-triethyl-1,4-phenylene)ether, and a combination thereof.

The polyamide resin (A-2) may be selected from the group consisting of polycaprolactam (polyamide 6), poly(11-aminoundecanoic acid) (polyamide 11), polylauryllactam (polyamide 12), polyhexamethylene adipamide (polyamide 66), polyhexamethylene azelamide (polyamide 69), polyhexamethylene sebacamide (polyamide 610), polyhexamethylene dodecanodiamide (polyamide 612), copolymers thereof, and a combination thereof.

The carbon nanotube (B) may have a diameter of 0.5 to 100 nm, and a length of 0.01 to 100 µm.

The styrene-based copolymer resin (C) may be selected from the group consisting of an AB-type diblock copolymer, a ABA-type triblock copolymer, a radical block copolymer, or a combination thereof The styrene-based copolymer resin (C) may also be a copolymer of a vinyl aromatic monomer, and a diene selected from the group consisting of a hydrogenated unsaturated diene, a partially hydrogenated unsaturated diene, and an unsaturated diene without hydrogenation.

The olefin-based copolymer (D) is a copolymer polymerized with different kinds of olefin-based monomers, or a copolymer of an olefin-based monomer and an acryl-based monomer, and it may include a reactive group capable of reacting with the polyamide resin. The reactive group may be selected from the group consisting of a maleic anhydride group, an epoxy group, and a combination thereof.

The polyphenylene ether-based resin composition may further include 0.5 to 2 parts by weight of a reactive monomer (E) based on 100 parts by weight of the base resin. The reactive monomer (E) may include an unsaturated carboxylic acid or an anhydride group thereof, and may be, for example selected from the group consisting of citric acid anhydride, maleic anhydride, maleic acid, itaconic anhydride, fumaric acid, (meth)acrylic acid, (meth)acrylic acid ester, and a combination thereof.

Another aspect of the present invention provides a molded product made using the polyphenylene-ether-based resin composition.

Hereinafter, further embodiments will be described in detail.

The polyphenylene ether-based resin composition having an excellent property balance of an electrical conductivity, an impact strength, a heat resistance may be usefully applied to a part material such as an automobile tailgate, an automobile fuel door, an automobile fender, or a door panel.

### DETAILED DESCRIPTION

Exemplary embodiments will hereinafter be described in detail. However, these embodiments are only exemplary, and the present invention is not limited thereto.

As used herein, when specific definition is not provided, the term "(meth)acrylate" refers to "acrylate" and "methacrylate."

The term "(meth)acrylic acid alkyl ester" refers to "acrylic acid alkyl ester" and "methacrylic acid alkyl ester," and the term "(meth)acrylic acid ester" refers to "acrylic acid ester" and "methacrylic acid ester."
The polyphenylene ether-based resin composition according to one embodiment includes (A) a base resin including (A-1) a polyphenylene ether-based resin and (A-2) polyamide resin, (B) carbon nanotube, (C) a styrene-based copolymer, and (D) an olefin-based copolymer.

Exemplary components included in the polyphenylene-ether-based resin composition according to embodiments will hereinafter be described in detail.

### (A) Base resin

### (A-1) Polyphenylene ether-based resin

The polyphenylene ether-based resin may be a polyphenylene ether resin singularly, or a mixture of polyphenylene ether resin and a vinyl aromatic polymer.

The polyphenylene ether resin may be selected from the group consisting of poly(2,6-dimethyl-1,4-phenylene)ether, poly(2,6-diethyl-1,4-phenylene)ether, poly(2,6-dipropyl-1,4-phenylene)ether, poly(2-methyl-6-ethyl-1,4-phenylene)ether, poly(2-methyl-6-propyl-1,4-phenylene)ether, poly(2-ethyl-6-propyl-1,4-phenylene)ether, poly(2,6-diphenyl-1,4-phenylene)ether, a copolymer of poly(2,6-dimethyl-1,4-phenylene)ether and poly(2,3,6-trimethyl-1,4-phenylene)ether, a copolymer of poly(2,6-dimethyl-1,4-phenylene)ether and poly(2,3,6-triethyl-1,4-phenylene)ether and a combination thereof. Among them, poly(2,6-dimethyl-1,4-phenylene)ether or a copolymer of poly(2,6-dimethyl-1,4-phenylene)ether and poly(2,3,6-trimethyl-1,4-phenylene)ether are preferable, and, poly(2,6-dimethyl-1,4-phenylene)ether may be more preferable.

The vinyl aromatic polymer includes polymerization products of vinyl aromatic monomers such as styrene, ρ -methyl styrene, α -methyl styrene, 4-N-propyl styrene, and among them, polymerization products of styrene and α-methyl styrene may be preferable.

A polymerization degree of the polyphenylene-ether-based resin has no particular limit. Considering thermal stability and workability of a resin composition, intrinsic viscosity measured in a chloroform solvent at 25° C may be preferably 0.2 to 0.8 dl/g.

The polyphenylene ether-based resin is included in an amount of 5 to 95 wt%, specifically 30 to 60 wt% based on the total amount of the base resin including a polyphenylene ether-based resin and a polyamide resin. When the polyphenylene-ether-based resin is included within the range, properties of a polyphenylene-ether resin are suitably realized and excellent impact resistance is obtained.

### (A-2) Polyamide resin

The polyamide resin includes an amide-group in the polymer main chain, and an amino acid, lactam or diamine, and dicarboxylic acid as main components that are polymerized to provide a polyamide.

Examples of the amino acid include 6-aminocaproic acid, 11-aminoundecanoic acid, 12-aminododecanoic acid, and para-aminomethylbenzoic acid. Examples of the lactam include ε-caprolactam, and ω-laurolactam, and examples of the diamine include an aliphatic, alicyclic, or aromatic diamine of tetramethylenediamine, hexamethylenediamine, 2-methylpentamethylenediamine, nonamethylenediamine, undecamethylenediamine, dodecamethylenediamine, 2,2,4-trimethylhexamethylenediamine, 2,4,4-trimethylhexamethylenediamine, 5-methylnonamethylenediamine, metaxylenediamine, paraxylenediamine, 1,3-bis(aminomethyl)cyclohexane, 1,4-bis(aminomethyl)cyclohexane, 1-amino-3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, bis(aminopropyl)piperazine, and aminoethylpiperazine. Examples of the dicarboxylic acid include an aliphatic, alicyclic, or aromatic dicarboxylic acid such as adipic acid, suberic acid, azelaic acid, sebacic acid, dodecane2 acid, terephthalic acid, isophthalic acid, 2-chloroterephthalic acid, 2-methylterephthalic acid, 5-methylisophthalic acid, 5-sodium sulfoisophthalate, 2,6-naphtha- lenedicarboxylic acid, hexahydroterephthalic acid, and hexahydroisophthalic acid. A polyamide homopolymer or copolymer derived from a raw material may be used singularly or as a mixture.

Examples of the polyamide resin may include polycaprolactam (polyamide 6), poly(11-aminoundecanoic acid) (polyamide 11), polylauryllactam (polyamide 12), polyhexamethylene adipamide (polyamide 66), polyhexamethylene azelamide (polyamide 69), polyhexamethylene sebacamide (polyamide 610), and polyhexamethylene dodecanodiamide (polyamide 612), copolymers thereof such as polyamide 6/610, polyamide 6/66, and polyamide 6/12. These may be used singularly or a mixture of two or more at an appropriate ratio.

The polyamide resin has a melting point of 250° C or more, and relative viscosity (measured at 25° C after adding 1 wt% of a polyamide resin in m-cresol) of 2 or more. When the melting point and relative viscosity are within the above range, excellent mechanical properties and heat resistance may be realized.
The polyamide resin is included in an amount of 5 to 95 wt%, specifically 40 to 70 wt% based on the total amount of the base resin including a polyphenylene-ether-based resin and a polyamide resin. When the polyamide resin is included within the range, excellent compatibility with a polyphenylene-ether-based resin is obtained.

### (B) Carbon nanotube

The carbon nanotubes have excellent mechanical strength, mechanical characteristics such as high Young's modulus, and aspect ratio, electrical conductivity, and thermal stability. When the carbon nanotubes are applied for making a polymer composite, a carbon nanotube-polymer composite having improved mechanical, thermal, and electrical properties is provided.

A method of synthesizing the carbon nanotubes includes arc-discharge, pyrolysis, plasma chemical vapor deposition (PECVD), thermal chemical vapor deposition (CVD), and electrolysis, and in one embodiment, the obtained carbon nanotubes may be used regardless of the synthesizing method.

The carbon nanotubes may be classified into single-walled carbon nanotubes, double-walled carbon nanotubes, and multi-walled carbon nanotubes, depending on the number of walls. In one embodiment, multi-walled carbon nanotubes are preferable, but it is not limited thereto.

The carbon nanotubes have no particular limit in size, they may have diameter and length of 0.5 to 100nm and 0.01 to 100 µm, respectively, and in one embodiment, may have a diameter and length of 1 to 10nm and 0.5 to 10 µm, respectively. When the carbon nanotubes have a diameter and length within the range, electrical conductivity and workability may be improved.

Also, the carbon nanotubes have a large aspect ratio (L/D) because of such a large size. When carbon nanotubes having L/D of 100 to 1000 are used, the electrical conductivity is improved.

The carbon nanotube is included in an amount of 0.01 to 5 parts by weight, specifically 0.5 to 2 parts by weight, based on 100 parts by weight of the base resin including the polyphenylene-ether-based resin and the polyamide resin

When the carbon nanotubes are included within the range, excellent electrical conductivity and impact resistance are obtained.

### (C) Styrene-based copolymer

The styrene-based copolymer may act as an impact-reinforcing agent in the polyphenylene ether-based resin composition according to one embodiment.

The styrene-based copolymer is derived from an vinyl aromatic monomer, and may be selected from the group consisting of an AB-type diblock copolymer, an ABA-type triblock copolymer, a radical block copolymer, and a combination thereof.

The block copolymer may be a copolymer of a vinyl aromatic monomer, and a diene selected from the group consisting of a hydrogenated unsaturated diene, a partially hydrogenated unsaturated diene, and an unsaturated diene without hydrogenation.

The vinyl aromatic monomer may include styrene, ρ -methyl styrene, α -methyl styrene, and 4-N-propyl styrene, and among them styrene, and α-methyl styrene are preferable. These monomers may be used singularly or as a mixture.
The AB-type diblock copolymer includes a polystyrene-polybutadiene copolymer, a polystyrene-polyisoprene copolymer, a polyalphamethyl- styrene-polybutadiene copolymer, or a hydrogenated copolymer thereof. The AB-type diblock copolymer is commercially well known in this field.

Examples of the AB-type diblock copolymer include Solprene and K-resin manufactured by Phillips, and Kraton D and Kraton G manufactured by Shell Co., Ltd.

The ABA-type triblock copolymer includes a copolymer such as polystyrene-polybutadiene-polystyrene (SBS), polystyrene-polyisoprene-polystyrene (SIS), polyalphamethylstyrene-polybutadienepolyalpha- methyl- styrene, and polyalphamethylstyrene-polyisoprene-polyalpha- methylstyrene, or a hydrogenated copolymer thereof. The ABA-type triblock copolymer is well known in the commercial field. Examples of the ABA-type triblock copolymer include Cariflex, Kraton D, and Kraton G manufactured by Shell Co., Ltd., and Septon manufactured by Kuraray Co., Ltd.

The styrene-based copolymer resin is included in an amount of 1 to 20 parts by weight, specifically 2 to 12 parts by weight, based on 100 parts by weight of the base resin including the polyphenylene ether-based resin and polyamide resin. When the styrene-based copolymer resin is included within the range, impact resistance is remarkably increased without decreasing excellent compatibility of a polyphenylene-ether-based resin and a polyamide resin.

### (D) Olefin-based copolymer

The olefin-based copolymer may act as an impact-reinforcing agent in the polyphenylene ether-based resin composition according to one embodiment, as in the styrene-based copolymer.
The olefin-based copolymer includes a copolymer polymerized with different kinds of olefin-based monomers or a copolymer of an olefin-based monomer and an acryl-based monomer.

The olefin-based monomer may include C1 to C10 alkylene. Examples thereof may include ethylene, propylene, isopropylene, butylene, isobutylene, and octane. These monomers may be used singularly or as a mixture.

The acryl-based monomer may include (meth)acrylic acid alkyl ester or (meth)acrylic acid ester. The alkyl refers to C1 to C10 alkyl. Examples of (meth)acrylic acid alkyl ester may include methyl(meth)acrylate, ethyl(meth)acrylate, propyl(meth)acrylate, or butyl(meth)acrylate, and methyl(meth)acrylate is preferable.

The olefin-based copolymer may include a reactive group capable of reacting with polyamide to improve the dispersion with a polyphenylene ether-based resin and a polyamide resin. In other words, the olefin-based copolymer has a structure in which the reactive group is grafted in a main chain including an olefin-based monomer, or a copolymer of an olefin-based monomer and an acryl-based monomer. The reactive group may include a maleic anhydride group, or an epoxy group. The groups may be used singularly or as a mixture.

The olefin-based copolymer may be prepared by using Ziegler-Natta catalyst, which is a generally-used olefin polymerization catalyst, or may be prepared by using a methallocene-based catalyst to provide a further selective structure.

The olefin-based copolymer is included in 1 to 20 parts by weight, specifically, 2 to 12 parts by weight based on the total amount of the base resin including the polyphenylene ether-based resin and the polyamide resin. When the olefin-based copolymer is included within the range, the impact resistance is remarkably improved while not deteriorating the excellent compatibility of polyphenylene ether-based resin and polyamide resin.

### (E) Reactive monomer

The reactive monomer includes an unsaturated carboxylic acid or the anhydride group thereof and acts to form a polyphenylene ether-based resin which is modified by grafting polyphenylene ether-based resin according to one embodiment.

Specific examples of the reactive monomer may include one selected from the group consisting of a citric acid anhydride, a maleic anhydride, a maleic acid, an anhydrous itaconic acid, fumaric acid, (meth)acrylic acid, (meth)acrylic acid ester, and a combination thereof. The citric acid anhydride is preferable since it may form the modified polyphenylene ether-based resin without using an initiator.

The method of manufacturing the modified polyphenylene ether-based resin which is grafted with the reactive monomer is not specifically limited, but the grafting reaction is preferably performed at a fusion knead state using a phosphite-based heat stabilizer considering the relatively high operation temperature.

The reactive monomer may be included in an amount of 0.5 to 2 parts by weight, specifically 0.5 to 1.2 parts by weight, based on 100 parts by weight of the base resin including the polyphenylene-ether-based resin and the polyamide resin. When the reactive monomer is included within the range, the polyphenylene-ether-based resin composition may have improved compatibility and excellent impact resistance.

### (F) Other additive

The polyphenylene ether-based resin composition according to one embodiment may further include an additive selected from the group consisting of an antibacterial agent, a heat stabilizer, an antioxidant, a release agent, a light stabilizer, an inorganic material additive, a surfactant, a coupling agent, a plasticizer, admixture, a stabilizer, a lubricant, an antistatic agent, an colorant aid, a flameproofing agent, a weather-resistance agent, a colorant, an ultraviolet (UV) absorber, an ultraviolet (UV) blocking agent, a flame retardant, filler, a nucleating agent, an adhesion aid, an adhesive, and a mixture thereof, as its application.

The antioxidant may include phenol-type, phosphate-type, thioether-type or amine-type antioxidant, the release agent may include a fluorine-included polymer, silicone oil, a metal salt of stearylic acid, a metal salt of montanic acid, a montanic acid ester wax, or a polyethylene wax. The weather-resistance agent may include a benzophenone or amine weather-resistance agent, and the colorant may include a dye or pigment. In addition, the ultraviolet (UV) blocking agent may include titanium oxide (TiO₂) or carbon black; the filler may include glass fiber, carbon fiber, silica, mica, alumina, clay, calcium carbonate, calcium sulfate, or glass bead. When the filler is added, the properties such as a mechanical strength and a heat resistance may be improved. The nucleating agent may include talc or clay.

The additive may be included in an amount of 0.1 to 30 parts by weight, based on 100 parts by weight of the base resin including the polyphenylene-ether-based resin and the polyamide resin. Within the range, the expected effects of the respective additives may be obtained, and excellent mechanical properties and improved surface appearance may be obtained.

The polyphenylene-ether-based resin composition according to one embodiment may be fabricated by a commonly known method. For example,
the components mentioned above and additives are mixed, and melt-extruded in an extruder to fabricate a pellet.

According to another embodiment, a molded product made using the polyphenylene-ether-based resin composition is provided. The polyphenylene-ether-based resin composition may be applied to a molded product that strongly needs electrical conductivity, impact strength, and heat resistance, such as part materials like tailgate and a fuel door for a car, a fender for a car, and a door panel.

Hereinafter, the embodiments are illustrated in more detail with reference to examples. However, the following examples are exemplary embodiments and the present invention is not limited thereto.

### (Examples)

A polyphenylene-ether-based resin composition according to one embodiment includes each component as follows.

### (A) Base resin

### (A-1) Polyphenylene ether-based resin

Poly(2,6-dimethyl-phenylene)ether (GE plastic HPP-820 made by GE plastics Ltd.) was used.

### (A-2) Polyamide resin

VYDYNE 50BW of polyamide 66manufactured by Solutia Inc. was used.

### (B) Carbon nanotube

C-tube 100 of multi-walled carbon nanotubes having a diameter of 10 to 50nm and a length of 1 to 25 µm manufactured by CNT Co., Ltd. was used as the carbon nanotube.

### (C) Styrene-based copolymer

A poly(styrene-ethylene/butylene-styrene) triblock copolymer (G1651 of Shell Chemical Co.) was used.

### (D) Olefin-based copolymer

The maleic anhydride group-grafted ethylene-octene copolymer of FUSABOND MN493D (manufactured by DuPont) was used.

### (E) Reactive monomer

Citric acid anhydride of Samchun Pure Chemical Ltd. was used.

### Examples 1 to 5 and Comparative Examples 1 to 4

Each aforementioned component was mixed according to the composition amount as shown in the following Table 1 to prepare polyphenylene-ether-based resin compositions. Then, each composition was melt-kneaded by using a twin screw melt-extruder heated at 280 to 300° C to fabricate a chip. The chip was dried at 130° C for 5 hours or more, and then a 10cm width × 10cm height × 0.3cm thickness flat specimens were fabricated using a screw-type injector heated at 280 to 300° C at a molding temperature ranging from 80 to 100° C.

**(Table 1)**

| | | Example | | | | | Comparative Example | | | |
|---|---|---|---|---|---|---|---|---|---|---|
| | | 1 | 2 | 3 | 4 | 5 | 1 | 2 | 3 | 4 |
| (A) Base resin | (A-1) polyphenylene ether-based resin (wt%) | 58 | 58 | 58 | 58 | 58 | 58 | 58 | 58 | 58 |
| | (A-2) polyamide resin (wt%) | 42 | 42 | 42 | 42 | 42 | 42 | 42 | 42 | 42 |
| (B) Carbon nanotube (parts by weight)* | | 0.5 | 1.2 | 1.8 | 1.2 | 0.5 | 1.8 | 1.8 | 5.5 | 1 |
| (C) Styrene-based copolymer (parts by weight)* | | 10 | 10 | 10 | 6 | 10 | 10 | 20 | 10 | - |
| (D) Olefin-based copolymer (parts by weight)* | | 5 | 1 | 5 | 15 | 5 | 25 | - | 5 | 10 |
| (E) Reactive monomer (parts by weight)* | | - | - | - | - | 1 | - | - | - | - |

| | | | | | | | | | | |
|---|---|---|---|---|---|---|---|---|---|---|
| * parts by weight: denotes a content unit represented based on 100 parts by weight of the base resin (A) | | | | | | | | | | |

### [Experimental Examples]

The specimens of Examples 1 to 5 and Comparative Examples 1 to 4 were evaluated regarding properties in the following method. The results are provided in the following Table 2.
(1) Notch Izod impact strength: 1/8" thick specimen was measured according to ASTM D256.
(2) Heat deflection temperature: heat deflection temperature was measured according to ASTM D648.
(3) Sheet resistance: The specimens were evaluated by applying 100V voltage and using a 4-probe method..

**(Table 2)**

| | Examples | | | | | Comparative Examples | | | |
|---|---|---|---|---|---|---|---|---|---|
| | 1 | 2 | 3 | 4 | 5 | 1 | 2 | 3 | 4 |
| Impact strength (kgf · cm/cm) | 22 | 18 | 16 | 20 | 24 | 20 | 10 | 7 | 11 |
| Heat deflection temperature (° C) | 201 | 202 | 202 | 201 | 201 | 188 | 190 | 202 | 203 |
| Sheet resistance (Ω/sq) | 10¹¹ | 10¹⁰ | 10⁸ | 10¹⁰ | 10¹¹ | 10⁸ | 10⁸ | 10⁴ | 10¹¹ |

As shown in Tables 1 and 2, it is confirmed that Examples 1 to 5 including all the polyphenylene ether-based resin, the polyamide resin, the carbon nanotube, the styrene-based copolymer, and the olefin-based copolymer had the excellent impact strength and heat resistance while maintaining the excellent electrical conductivity compared to Comparative Example 1 including the olefin-based copolymer in deviating the range according to one embodiment, Comparative Example 2 including no olefin-based copolymer, Comparative Example 3 including the carbon nanotube in deviating the range according to one embodiment, and Comparative Example 4 including no styrene-based copolymer.

Particularly, Comparative Examples 2 and 4 including either styrene-based copolymer or olefin-based copolymer remarkably deteriorated the impact strength compared to Examples 1 to 4 including the both.

While this disclosure has been described in connection with what is presently considered to be practical exemplary embodiments, it is to be understood that the invention is not limited to the disclosed embodiments, but, on the contrary, is intended to cover various modifications and equivalent arrangements included within the scope of the appended claims. Therefore, the aforementioned embodiments should be understood to be exemplary but not limiting the present invention in any way.

## Claims

1. A polyphenylene-ether-based resin composition, comprising:
(A) a base resin including (A-1) 5 to 95 wt% of a polyphenylene ether-based resin and (A-2) 5 to 95 wt% of a polyamide resin;
(B) 0.01 to 5 parts by weight of carbon nanotube, based on 100 parts by weight of the base resin;
(C) 1 to 20 parts by weight of a styrene-based copolymer, based on 100 parts by weight of the base resin; and
(D) 1 to 20 parts by weight of an olefin-based copolymer, based on 100 parts by weight of the base resin;
wherein the olefin-based copolymer (D) is a copolymer polymerized with different kinds of olefin-based monomers, or a copolymer of an olefin-based monomer and an acryl-based monomer.

2. The polyphenylene-ether-based resin composition of claim 1, wherein the polyphenylene ether-based resin (A-1) is a polyphenylene ether resin, or a mixture of a polyphenylene ether and a vinyl aromatic polymer.

3. The polyphenylene-ether-based resin composition of claim 2, wherein the polyphenylene ether resin is selected from the group consisting of poly(2,6-dimethyl-1,4-phenylene)ether, poly(2,6-diethyl-1,4-phenylene)ether, poly(2,6-dipropyl-1,4-phenylene)ether, poly(2-methyl-6-ethyl-1,4-phenylene)ether, poly(2-methyl-6-propyl-1,4-phenylene)ether, poly(2-ethyl-6-propyl-1,4-phenylene)ether, poly(2,6-diphenyl-1,4-phenylene)ether, a copolymer of poly(2,6-dimethyl-1,4-phenylene)ether and poly (2,3,6-trimethyl-1,4-phenylene)ether, a copolymer of poly (2,6-dimethyl-1,4-phenylene)ether and poly(2,3,6-triethyl-1,4-phenylene)ether, and a combination thereof.

4. The polyphenylene-ether-based resin composition of claim 1, wherein the polyamide resin (A-2) is selected from the group consisting of polycaprolactam (polyamide 6), poly(11-aminoundecanoic acid) (polyamide 11), polylauryllactam (polyamide 12), polyhexamethylene adipamide (polyamide 66), polyhexamethylene azelamide (polyamide 69), polyhexamethylene sebacamide (polyamide 610), polyhexamethylene dodecanodiamide (polyamide 612), copolymers thereof, and a combination thereof.

5. The polyphenylene-ether-based resin composition of claim 1, wherein the carbon nanotube (B) may have a diameter of 0.5 to 100 nm, and a length of 0.01 to 100 µm.

6. The polyphenylene-ether-based resin composition of claim 1, wherein the styrene-based copolymer (C) is selected from the group consisting of an AB-type diblock copolymer, a ABA-type triblock copolymer, a radical block copolymer, or a combination thereof.

7. The polyphenylene-ether-based resin composition of claim 1, wherein the styrene-based copolymer (C) is a copolymer of a vinyl aromatic monomer, and a diene selected from the group consisting of a hydrogenated unsaturated diene, a partially hydrogenated unsaturated diene, and an unsaturated diene without hydrogenation.

8. The polyphenylene-ether-based resin composition of claim 1, wherein the olefin-based copolymer (D) comprises a reactive group capable of reacting with the polyamide resin (A-2).

9. The polyphenylene-ether-based resin composition of claim 8, wherein the reactive group is selected from the group consisting of a maleic anhydride group, an epoxy group, and a combination thereof.

10. The polyphenylene-ether-based resin composition of claim 1, wherein the polyphenylene ether-based resin composition further comprises include 0.5 to 2 parts by weight of a reactive monomer (E) based on 100 parts by weight of the base resin.

11. The polyphenylene-ether-based resin composition of claim 10, wherein the reactive monomer (E) comprises an unsaturated carboxylic acid or an anhydride group thereof.

12. The polyphenylene-ether-based resin composition of claim 10, wherein the reactive monomer (E) is selected from the group consisting of citric acid anhydride, maleic anhydride, maleic acid, itaconic anhydride, fumaric acid, (meth)acrylic acid, (meth)acrylic acid ester, and a combination thereof.

13. A molded product made using the polyphenylene-ether-based resin composition of any one of claims 1 to 12.

## Patentansprüche

1. Harzzusammensetzung auf Polyphenylenetherbasis, umfassend:
(A) ein Basisharz einschließend (A-1) 5 bis 95 Gew.-% eines Harzes auf Polyphenylenetherbasis und (A-2) 5 bis 95 Gew.-% eines Polyamidharzes;
(B) 0,01 bis 5 Gewichtsteile Kohlenstoffnanoröhrchen, bezogen auf 100 Gewichtsteile des Basisharzes;
(C) 1 bis 20 Gewichtsteile eines Copolymers auf Styrolbasis, bezogen auf 100 Gewichtsteile des Basisharzes; und
(D) 1 bis 20 Gewichtsteile eines Copolymers auf Olefinbasis, bezogen auf 100 Gewichtsteile des Basisharzes;
wobei das Copolymer auf Olefinbasis (D) ein Copolymer, das mit unterschiedlichen Arten von Monomeren auf Olefinbasis polymerisiert ist, oder ein Copolymer von einem Monomer auf Olefinbasis und einem Monomer auf Acrylbasis ist.

2. Harzzusammensetzung auf Polyphenylenetherbasis nach Anspruch 1, wobei das Harz auf Polyphenylenetherbasis (A-1) ein Polyphenylenetherharz, oder ein Gemisch von einen Polyphenylenether und einem Vinylaromatenpolymer ist.

3. Harzzusammensetzung auf Polyphenylenetherbasis nach Anspruch 2, wobei das Polyphenylenetherharz ausgewählt ist aus der Gruppe bestehend aus Poly(2,6-dimethyl-1,4-phenylen)ether, Poly(2,6-diethyl-1,4-phenylen)ether, Poly(2,6-dipropyl-1,4-phenylen)ether, Poly(2-methyl-6-ethyl-1,4-phenylen)ether, Poly(2-methyl-6-propyl-1,4-phenylen)ether, Poly(2-ethyl-6-propyl-1,4-phenylen)ether, Poly(2,6-diphenyl-1,4-phenylen)ether, einem Copolymer von Poly(2,6-dimethyl-1,4-phenylen)ether und Poly(2,3,6-trimethyl-1,4-phenylen)ether, einem Copolymer von Poly(2,6-dimethyl-1,4-phenylen)ether und Poly(2_{,}3,6-triethyl-1,4-phenylen)ether, und einer Kombination davon.

4. Harzzusammensetzung auf Polyphenylenetherbasis nach Anspruch 1, wobei das Polyamidharz (A-2) ausgewählt ist aus der Gruppe bestehend aus Polycaprolactam (Polyamid 6), Poly(11-aminoundecansäure) (Polyamid 11), Polylauryllactam (Polyamid 12), Polyhexamethylenadipamid (Polyamid 66), Polyhexamethylenazelamid (Polyamide 69), Polyhexamethylensebacamid (Polyamid 610), Polyhexamethylendodecanodiamid (Polyamid 612), Copolymeren davon, und einer Kombination davon.

5. Harzzusammensetzung auf Polyphenylenetherbasis nach Anspruch 1, wobei die Kohlenstoffnanoröhrchen (B) einen Durchmesser von 0,5 bis 100 nm und eine Länge von 0,01 bis 100 µm aufweisen können.

6. Harzzusammensetzung auf Polyphenylenetherbasis nach Anspruch 1, wobei das Copolymer auf Styrolbasis (C) aus der Gruppe bestehend aus einem Diblock-Copolymer vom AB-Typ, einem Triblock-Copolymer vom ABA-Typ, einem Radikal-BlockCopolymer, oder einer Kombination davon ausgewählt ist.

7. Harzzusammensetzung auf Polyphenylenetherbasis nach Anspruch 1, wobei das Copolymer auf Styrolbasis (C) ein Copolymer eines Vinylaromatenmonomers und eines Diens ausgewählt aus der Gruppe bestehend aus einem hydrierten ungesättigten Dien, einem teilweise hydrierten ungesättigten Dien, und einem ungesättigten Dien ohne Hydrierung ist.

8. Harzzusammensetzung auf Polyphenylenetherbasis nach Anspruch 1, wobei das Copolymer auf Olefinbasis (D) eine reaktive Gruppe umfasst, die zur Umsetzung mit dem Polyamidharz (A-2) befähigt ist.

9. Harzzusammensetzung auf Polyphenylenetherbasis nach Anspruch 8, wobei die reaktive Gruppe aus der Gruppe bestehend aus einer Maleinsäureanhydridgruppe, einer Epoxygruppe, und einer Kombination davon ausgewählt ist.

10. Harzzusammensetzung auf Polyphenylenetherbasis nach Anspruch 1, wobei die Harzzusammensetzung auf Polyphenylenetherbasis weiterhin 0,5 bis 2 Gewichtsteile eines reaktiven Monomers (E), bezogen auf 100 Gewichtsteile des Basisharzes, umfasst.

11. Harzzusammensetzung auf Polyphenylenetherbasis nach Anspruch 10, wobei das reaktive Monomer (E) eine ungesättigte Carbonsäure oder eine Anhydridgruppe davon umfasst.

12. Harzzusammensetzung auf Polyphenylenetherbasis nach Anspruch 10, wobei das reaktive Monomer (E) aus der Gruppe bestehend aus Zitronensäureanhydrid, Maleinsäureanhydrid, Maleinsäure, Itaconsäureanhydrid, Fumarsäure, (Meth)acrylsäure, (Meth)acrylsäureester, und einer Kombination davon ausgewählt ist.

13. Formerzeugnis, hergestellt unter Verwendung der Harzzusammensetzung auf Polyphenylenetherbasis nach irgendeinem der Ansprüche 1 bis 12.

## Revendications

1. Composition de résine à base de poly(phénylène éther), comprenant :
(A) une résine de base comprenant (A-1) 5 à 95 % en poids d'une résine à base de poly(phénylène éther) et (A-2) 5 à 95 % en poids d'une résine de polyamide ;
(B) 0,01 à 5 parties en poids d'un nanotube de carbone, pour 100 parties en poids de la résine de base ;
(C) 1 à 20 parties en poids d'un copolymère à base styrénique, pour 100 parties en poids de la résine de base ; et
(D) 1 à 20 parties en poids d'un copolymère à base oléfinique, pour 100 parties en poids de la résine de base,
le copolymère à base oléfinique (D) étant un copolymère polymérisé avec différents types de monomères à base oléfinique, ou un copolymère d'un monomère à base oléfinique et d'un monomère à base acrylique.

2. Composition de résine à base de poly(phénylène éther) selon la revendication 1, dans laquelle la résine à base de poly(phénylène éther) (A-1) est une résine de poly(phénylène éther) ou un mélange d'un poly(phénylène éther) et d'un polymère vinylaromatique.

3. Composition de résine à base de poly(phénylène éther) selon la revendication 2, dans laquelle la résine de poly(phénylène éther) est choisie dans le groupe consistant en le poly(2,6-diméthyl-1,4-phénylène)éther, le poly(2,6-diéthyl-1,4-phénylène)éther, le poly(2,6-dipropyl-1,4-phénylène)éther, le poly(2-méthyl-6-éthyl-1,4-phénylène)éther, le poly(2-méthyl-6-propyl-1,4-phénylène)éther, le poly(2-éthyl-6-propyl-1,4-phénylène)éther, le poly(2,6-diphényl-1,4-phénylène)éther, un copolymère de poly(2,6-diméthyl-1,4-phénylène)éther et de poly(2,3,6-triméthyl-1,4-phénylène)éther, un copolymère de poly(2,6-diméthyl-1,4-phénylène)éther et de poly(2,3,6-triéthyl-1,4-phénylène)éther, ou une combinaison de ceux-ci.

4. Composition de résine à base de poly(phénylène éther) selon la revendication 1, dans laquelle la résine de polyamide (A-2) est choisie dans le groupe consistant en le polycaprolactame (polyamide 6), le poly(acide 11-aminoundécanoïque) (polyamide 11), le polylauryllactame (polyamide 12), le polyhexaméthylène-adipamide (polyamide 66), le polyhexaméthylène-azélamide (polyamide 69), le polyhexaméthylènesébaçamide (polyamide 610), le polyhexaméthylène-dodécanodiamide (polyamide 612), les copolymères de ceux-ci et une combinaison de ceux-ci.

5. Composition de résine à base de poly(phénylène éther) selon la revendication 1, dans laquelle le nanotube de carbone (B) peut avoir un diamètre de 0,5 à 100 nm et une longueur de 0,01 à 100 µm.

6. Composition de résine à base de poly(phénylène éther) selon la revendication 1, dans laquelle le copolymère à base styrénique (C) est choisi dans le groupe consistant en un copolymère dibloc de type AB, un copolymère tribloc de type ABA, un copolymère à blocs radicalaire, ou une combinaison de ceux-ci.

7. Composition de résine à base de poly(phénylène éther) selon la revendication 1, dans laquelle le copolymère à base styrénique (C) est un copolymère d'un monomère vinylaromatique et d'un diène choisi dans le groupe consistant en un diène insaturé hydrogéné, un diène insaturé partiellement hydrogéné et un diène insaturé sans hydrogénation.

8. Composition de résine à base de poly(phénylène éther) selon la revendication 1, dans laquelle le copolymère à base oléfinique (D) comprend un groupe réactif capable de réagir avec la résine de polyamide (A-2).

9. Composition de résine à base de poly(phénylène éther) selon la revendication 8, dans laquelle le groupe réactif est choisi dans le groupe consistant en un groupe anhydride maléique, un groupe époxy et une combinaison de ceux-ci.

10. Composition de résine à base de poly(phénylène éther) selon la revendication 1, la composition de résine à base de poly(phénylène éther) comprenant en outre 0,5 à 2 parties en poids d'un monomère réactif (E), pour 100 parties en poids de la résine de base.

11. Composition de résine à base de poly(phénylène éther) selon la revendication 10, dans laquelle le monomère réactif (E) comprend un acide carboxylique insaturé ou un groupe anhydride de ce dernier.

12. Composition de résine à base de poly(phénylène éther) selon la revendication 10, dans laquelle le monomère réactif (E) est choisi dans le groupe consistant en l'anhydride citrique, l'anhydride maléique, l'acide maléique, l'anhydride itaconique, l'acide fumarique, l'acide (méth)acrylique, et les esters de l'acide (méth)acrylique et une combinaison de ceux-ci.

13. Produit moulé fabriqué par utilisation de la composition de résine à base de poly(phénylène éther) selon quelconque des revendications 1 à 12.
